# EUROPÄISCHE PATENTSCHRIFT

(11) **EP 3 061 153 B1**
(45) Veröffentlichungstag und Bekanntmachung des Hinweises auf die Patenterteilung: **27.03.2019**
(21) Anmeldenummer: 14757905.6
(22) Anmeldetag: 26.08.2014
(51) Int. Cl.: H01R 4/02, H01R 43/02, H01R 4/62, H01R 4/70, H01R 101/00

(54) **ELEKTRISCHE ANSCHLUSSKONSOLE UND VERWENDUNG DAVON**
ELECTRICAL CONNECTION BRACKET AND USE THEREOF
CONSOLE DE CONNEXION ÉLECTRIQUE ET SON UTILISATION

(30) Priorität: 25.10.2013 DE 102013017660
(43) Veröffentlichungstag der Anmeldung: 31.08.2016
(73) Patentinhaber: Auto-Kabel Management GmbH, 79688 Hausen i.W. (DE)
(72) Erfinder: GOTTSCHLICH, Heinz-Georg, 41812 Erkelenz (DE); SCHLOMS, Martin, 52070 Aachen (DE)
(74) Vertreter: Cohausz & Florack
(86) Internationale Anmeldenummer: PCT/EP2014/068039
(87) Internationale Veröffentlichungsnummer: WO 2015/058887

(56) Entgegenhaltungen:
- WO-A2-2006/082231
- GB-A- 1 413 321
- GB-A- 2 330 021
- US-A1- 2007 029 103

## Beschreibung

Der Gegenstand betrifft eine elektrische Anschlusskonsole für eine Kraftfahrzeug-Bordnetzleitung umfassend ein Kabel mit einem metallischen Rundleiter und ein mit dem Leiter elektrisch und mechanisch verbundenen elektrischen Abgriff. Der Gegenstand betrifft darüber hinaus die Verwendung einer solchen Anschlusskonsole.

GB-1 413 321 offenbart eine Anschlusskonsole des Standes der Technik mit einem Rundleiter und einem Abgriff.

WO-2006082231 betrifft einen Abgriff mit einem Anschlussbolzen für einen Flachleiter.

In einem Kraftfahrzeug Bordnetz ist es notwenig, ausgehend von einem Hauptenergiestrang, der unmittelbar mit dem Pluspol der Batterie verbunden ist, elektrische Abgänge zu Verbrauchen zu realisieren. Aufgrund der Vielzahl der in einem Bordnetz anzuschließenden elektrischen Verbraucher ist eine weite Verzweigung der Bordnetzleitung erforderlich. Einige Verbraucher benötigen große Leistungen von der Batterie und müssen somit über Kabel mit großen Leitungsquerschnitten an das Verteilnetz angeschlossen werden. Gruppen von Verbrauchern müssen häufig über eine gemeinsame Sicherung abgesichert werden, andererseits ist es auch notwendig, ausgehend von der Hauptenergieleitung eine Mehrzahl von jeweils abgesicherten Leitungssträngen zur Verfügung zu stellen.

Der Abgriff elektrischer Energie vom Hauptenergiestrang ist nicht ohne Weiteres möglich. Zum Einen ist ein solcher Abgriff jeweils mit einem Übergangswiderstand und somit ohmschen Verlusten verbunden und zum Anderen besteht an den Abgriffen eine erhöhte Korrosionsgefahr.

Darüber hinaus ist bei der Verwendung von Aluminiumkabeln der elektrische Abgriff stets der Gefahr ausgesetzt, dass durch Oxidation des Aluminiumleiters der Übergangswiderstand groß wird und die elektrische Verlustleistung an diesem Übergangswiderstand zu einer ungewünschten Erwärmung der Leitung führt.

Ausgehend von diesen Problemen lag dem Gegenstand die Aufgabe zu Grunde, eine elektrische Anschlusskonsole zur Verfügung zu stellen, mit welcher eine dezentrale Bordnetztopologie ermöglicht wird.

Diese Aufgabe wird durch eine elektrische Anschlusskonsole nach Anspruch 1 gelöst. Insbesondere in Kraftfahrzeug Bordnetzen vorzugsweise in solchen, in denen die Batterie im Heck des Fahrzeugs und die Antriebsmaschine, insbesondere der Starter der Verbrennungsmaschine, aber auch ggf. ein Elektromotor für den Antrieb, im Motorraum angeordnet sind, verläuft der Hauptbatteriestrang vom Heck bis zur Front des Fahrzeugs. Dies kann durch eine Unterflurverlegung der Batterieleitung oder auch durch eine Innenraumverlegung der Batterieleitung erfolgen. Entlang dieses Batteriestrangs kann mit Hilfe der gegenständlichen Anschlusskonsole eine Mehrzahl von elektrischen Abgängen in besonders einfacher Weise realisiert werden. Insbesondere wenn der Batteriestrang aus einem Aluminiumleiter, insbesondere einem Aluminiumvollleiter gebildet ist, ist es problematisch, Anschlusskonsolen an solchen Leitern anzuordnen. Mit Hilfe der gegenständlichen Lösung ist es möglich, in einem nicht isolierten Bereich, insbesondere in einem von den Leitungsenden entfernten Mittenbereich des Kabels, ein metallisches Flachteil mit einem mit dem Flachteil verschweißten metallischen Anschlussbolzen an dem metallischen Leiter anzuordnen. Hierzu wird ein elektrischer Abgriff durch das metallische Flachteil und den Anschlussbolzen gebildet. Das Flachteil wird stoffschlüssig mit dem Leiter im Anschlussbereich verbunden. Der Anschlussbereich liegt zwischen den Enden des Kabels und ist vorzugsweise in einem Mittenbereich des Kabels angeordnet. Insbesondere liegt der Anschlussbereich entfernt von den distalen Enden des Kabels. Durch das stoffschlüssige Anordnen des Flachteils auf dem Leiter kann eine vergrößerte Anschlussfläche realisiert werden, über die ein ausreichend hoher Stromfluss mit geringen elektrischen Verlusten möglich ist.

Insbesondere ist der Leiter des elektrischen Kabels isoliert und in dem Anschlussbereich ist der Leiter frei von der Isolation. Somit liegt der Anschlussbereich zwischen zwei isolierten Bereichen des Leiters. In diesem abisolierten Bereich kann gemäß einem Ausführungsbeispiel das Flachteil stoffschlüssig mit dem Leiter verbunden sein. Sind mehrere abisolierte Bereiche vorgesehen, können entlang des Verlaufs des Kabels eine oder mehrere Anschlusskonsolen vorgesehen sein, über die elektrische Abgriffe möglich sind. Insbesondere wenn das Kabel ein vom Hauptbatteriestrang ist, können somit vielfältige elektrische Abgriffe an dem Batteriestrang ermöglicht werden, ohne den Leitwert der Batterieleitung als solche durch ansonsten notwendige Unterbrechungen negativ zu beeinflussen. Die Abgriffe führen nicht zu einer erhöhten elektrischen Verlustleistung entlang des Kabels, da das Kabel durch die Abgriffe nicht unterbrochen wird.

Mittels einer stoffschlüssigen Verbindung kann der Abgriff, respektive dessen metallisches Flachteil, mit der Leitung des Kabels verbunden werden. Hierbei bleibt das Kabel unversehrt und sein Leitwert wird im wesentlichen nicht beeinflusst. So ist es möglich, ein ein- oder zwei- oder mehrstückiges Kabel von der Batterie bis zum Motorraum, insbesondere bis zum Starter oder zum Elektromotor im Motorraum zu führen, welches durch Abgriffe in seiner elektrischen Leitfähigkeit jeweils eines Abschnittes nicht oder nur marginal beeinflusst wird. Die Isolation des Kabels ist derart, dass diese in den Isolationsabschnitten den Leiter vollständig umschließt. Die Isolation ist vorzugsweise aus einem Nichtleiter, insbesondere einem Kunststoff, wie beispielsweise PVC oder Silikon gebildet.

Erfindungsgemäß ist der elektrische Leiter ein Rundleiter. Vorzugsweise ist der elektrische Leiter dabei biegesteif und somit auf Grund insbesondere seiner eigenen Gewichtskraft nicht plastisch verformbar. Es wird auch vorgeschlagen, dass der Leiter aus Aluminium oder einer Legierung davon gebildet ist. Insbesondere E-Aluminium, beispielsweise Aluminium 99,5 kann für den Leiter zum Einsatz kommen.

Um die Anschlussfläche zwischen dem Flachteil und dem Leiter im Anschlussbereich möglichst großflächig gestalten zu können, wird erfindungsgemäß vorgesehen, dass der Leiter im Anschlussbereich einen flächigen Bereich aufweist. Erfindungsgemäß ist im Anschlussbereich ein Planum des Leiters gebildet, auf welchem das Flachteil stoffschlüssig angeordnet werden kann. Dieser flächige Bereich wird gemäß einem Ausführungsbeispiel durch spanendes oder spanloses Umformen hergestellt. Insbesondere kann ein Stauchen oder Pressen, insbesondere ein radiales Stauchen oder Pressen dazu verwendet werden, den flächigen Bereich des Leiters zu bilden. Vorzugsweise kann das Umformen unmittelbar während eines Fügeprozesses zwischen dem Leiter und dem Flachteil erfolgen. So kann z.B. bei einem Verschweißen mittels z.B. Ultraschall die Sonotrode und der Amboss sowohl zum Verschweißen der Bauteile als auch zum gleichzeitigen Formen des Planums durch Stauchen zum Einsatz kommen. Auch ist ein Reibpunktschweißen möglich, wobei hier die Schweißwerkzeuge gleichzeitig das Schweißen als auch das Umformen ermöglichen können.

Die stoffschlüssige Verbindung des Flachteils an dem Leiter ist insbesondere dann vereinfacht, wenn dieser aus einem Vollmaterial gebildet ist. Anders als bei Litzenleitern ist der Leiter aus Vollmaterial einstückig und ein Verschweißen, insbesondere mittels Ultraschall, ist begünstigt, da dann nicht einzelne Litzen in Schwingung gebracht werden können wodurch die Schweißenergie kompensiert werden könnte. Vielmehr wird bei einem Vollmaterial beim Schweißen die gesamte Schweißenergie in die Kontaktfläche zwischen dem Flachteil und dem Leiter im Anschlussbereich eingebracht und die Materialien schmelzen auf.

Abhängig von der Verwendung des Materials des Leiters wird vorzugsweise das Flachteil aus einem elektrisch ähnlichen, insbesondere dem gleichen metallischen Material gebildet. Ist der Leiter beispielsweise aus Kupfer oder einer Legierung davon gebildet, kann das Flachteil ebenfalls aus Kupfer gebildet werden. Da jedoch insbesondere bei der Verwendung von Aluminium die gegenständliche Anschlusskonsole vorteilhaft ist, wird auch gemäß einem Ausführungsbeispiel vorgeschlagen, dass das Flachteil aus Aluminium oder Legierungen davon gebildet ist. Durch die Verwendung eines elektrisch ähnlichen oder gleichen Metalls für den Leiter als auch das Flachteil wird eine sortenreine Verbindung im Bereich der Anschlusskonsole zwischen Abgriff und Leiter gewährleistet. Kontaktkorrosionen werden somit verhindert bzw. auf ein Minimum reduziert.

Auf der anderen Seite ist die Anschlusskonsole dazu gedacht, einen elektrischen Abgriff zur Verfügung zu stellen. Dieser Abgriff wird durch von dem Abgriff abgehende Kabel genutzt. Diese können beispielsweise aus Kupfer gebildet sein. Um den elektrischen Abgriff an der Anschlusskonsole zu erleichtern, wird vorgeschlagen, dass der Anschlussbolzen aus Kupfer oder Legierungen davon gebildet sein kann. Es ist jedoch auch ein Abgang zu einem elektrischen Kontaktteil aus Aluminium möglich, so dass dann der Anschlussbolzen ebenfalls aus Aluminium gebildet sein kann.

Die Kontaktkorrosion zwischen dem Flachteil aus Aluminium und dem Anschlussbolzen kann dadurch reduziert werden, dass der Anschlussbolzen aus Stahl oder Edelstahl gebildet ist. In diesem Fall ist die Kontaktkorrosion zwischen dem Anschlussbolzen und dem Flachteil vernachlässigbar. Durch geeignete Isolationsmaßnahmen kann die Kontaktstelle zwischen dem Anschlussbolzen und dem Flachteil vor Umwelteinflüssen, insbesondere vor Wasser geschützt werden und somit die Korrosionsgefahr verringert werden.

Um den Anschlussbolzen für den Anschluss an einen Kabelschuh oder ein sonstiges Kabelende auszustatten, wird vorgeschlagen, dass dieser verzinnt und/oder unternickelt ist.

Eine besonders gute Verbindung zwischen dem Flachteil und dem Leiter ist dann möglich, wenn diese mittels Ultraschallschweißen hergestellt ist. Durch das Ultraschallschweißen wird eine eventuell vorhandene Aluminiumoxidschicht auf dem Leiter aufgebrochen und der entstehende Schweißknoten ist weitestgehend frei von Aluminiumoxid. Hierdurch wird der Übergangswiderstand im Bereich des Schweißknotens gegenüber herkömmlichen Schweißverfahren verringert.

Gemäß einem Ausführungsbeispiel wird vorgeschlagen, dass der Anschlussbolzen mittels Reibschweißen, insbesondere Rotationsreibschweißen oder Reibpunktschweißen, aber auch mittels Elektroschweißen, mit dem Flachteil verbunden ist. Durch das Reibschweißen des Anschlussbolzens an das Flachteil kann ebenfalls eine eventuell vorhandene Aluminiumoxidschicht auf dem Flachteil aufgebrochen und der Übergangswiderstand zwischen dem Flachteil und dem Anschlussbolzen klein gehalten werden.

Gemäß einem Ausführungsbeispiel wird vorgeschlagen, dass das Flachteil auf der dem Anschlussbolzen abgewandten Seite mit dem Leiter stoffschlüssig verbunden ist. Auf der einen Seite des Flachteils kann somit der Leiter stoffschlüssig mit dem Flachteil verbunden und auf der anderen Seite des Flachteils der Anschlussbolzen. Da der Leiter auf der dem Anschlussbolzen abgewandten Seite mit dem Flachteil verbunden ist, behindert der Leiter den Anschluss eines elektrischen Anschlusses an den Anschlussbolzen nicht. Die Abgangsrichtung eines elektrischen Anschlusses an dem Anschlussbolzen ist somit frei wählbar und kann insbesondere winklig als auch parallel zum Verlauf des Leiters erfolgen.

Gemäß einem Ausführungsbeispiel wird vorgeschlagen, dass das Flachteil, in Teilen der Bolzen und der Leiter mit einer Isolation ummantelt sind. Insbesondere ist die Isolation derart, dass sie nicht nur das Flachteil, Teile des Bolzens und den Leiter umgibt, sondern bis über die Isolation des Leiters hinaus ragt. Somit wird eine vollständige Einhausung des Flachteils, des Teils des Bolzens und des Leiters ermöglicht. Der Eintritt von Feuchtigkeit wird durch die Isolation weitestgehend verhindert. Hierdurch sind die Übergänge zwischen dem Leiter und dem Flachteil, respektive zwischen dem Flachteil und dem Anschlussbolzen vor Umgebungsfeuchte geschützt.

Um einen elektrischen Anschluss an dem Anschlussbolzen zu ermöglichen, ist der Anschlussbolzen an seinem vom Flachteil entfernten Ende frei von der Isolation. Es ist möglich, dass die Isolation im Bereich des Bolzens derart ist, dass sie zur Aufnahme eines Verschlusses, insbesondere in Form einer Kappe gebildet ist. Somit kann das Ende des Bolzens mit einer Isolationskappe abgedeckt werden, und für den Fall, dass ein Anschluss an den Bolzen erfolgen soll, die Kappe entfernt werden.

Um im Rahmen der Installation des Bordnetzes Fehlpolungen zu vermeiden und insbesondere die richtigen Bolzen für die jeweiligen Abgänge zu kontaktieren, wird vorgeschlagen, dass die Isolation im Bereich des von dem Flachteil entfernten Ende des Anschlussbolzens Poka Yoke mechanisch kodiert ist. Durch eine bestimmte Form des Umfangs der Isolation des Bolzens im Bereich des von dem Flachteil entfernten Endes kann gewährleistet werden, dass nur bestimmte Arten von Anschlusssteckern an den Bolzen angeschlossen werden können. Sofern z.B. der Innenumfang eines Steckers nicht kongruent zu dem Außenumfang der Isolation am Bolzen ist, kann eine Steckverbindung verhindert sein. Hierdurch können Fehlverbindungen verhindert werden. Insbesondere erfolgt die Kodierung durch Formgebung des Außenumfangs der Isolation im Bereich des Endes des Bolzens.

Um die Anschlusskonsole beispielsweise in einer Aufnahme innerhalb der Fahrzeugkarosse fixieren zu können, wird vorgeschlagen, dass eine Kantenlänge des Flachteils größer ist als der Durchmesser der Leitung, insbesondere größer als der Durchmesser des Kabels ist. Insbesondere haben sich quadratische als auch rechteckige Formen des Flachteils als vorteilhaft herausgestellt.

Der gegenständliche Anschlussbolzen lässt sich insbesondere in Energieleitungen, beispielsweise Batterieleitungen, insbesondere Hochstromleitungen, insbesondere Kraftfahrzeugbatterieleitungen verwenden.

Nachfolgend wird der Gegenstand anhand einer Ausführungsbeispiele zeigenden Zeichnung näher erläutert. In der Zeichnung zeigen:
- Fig. 1a: einen Querschnitt eines Kabels;
- Fig. 1b: eine Ansicht eines abisolierten Kabels;
- Fig. 1c: eine Ansicht eines abisolierten, gestauchten Kabels;
- Fig. 2: eine Ansicht eines Kabels nach Figur 1;
- Fig. 3a: eine Ansicht eines Anschlussbolzens gemäß einem Ausführungsbeispiel;
- Fig. 3b: eine Ansicht eines Anschlussbolzens gemäß einem weiteren Ausführungsbeispiel;
- Fig. 3c: eine Ansicht eines Anschlussbolzens gemäß einem weiteren Ausführungsbeispiel;
- Fig. 3d: eine Ansicht eines Anschlussbolzens gemäß einem weiteren Ausführungsbeispiel;
- Fig. 4: eine Ansicht eines Bolzens gemäß Figur 3b;
- Fig. 5a: eine Draufsicht auf ein Flachteil gemäß einem Ausführungsbeispiel;
- Fig. 5b: eine Draufsicht auf ein Flachteil gemäß einem Ausführungsbeispiel;
- Fig. 5c: eine Draufsicht auf ein Flachteil gemäß einem Ausführungsbeispiel;
- Fig. 6: eine Ansicht eines Flachteils verbunden mit einem Anschlussbolzen;
- Fig. 7: eine Ansicht einer Anschlusskonsole gemäß einem Ausführungsbeispiel;
- Fig. 8: eine Ansicht einer Anschlusskonsole gemäß Figur 7;
- Fig. 9: einen Querschnitt einer isolierten Anschlusskonsole;
- Fig. 10: eine Ansicht einer Anschlusskonsole gemäß Figur 9 mit einem daran angeschlossenen Sicherungskasten;
- Fig. 11a: eine Draufsicht auf eine mechanische Kodierung eines Anschlussbolzens;
- Fig. 11b: eine Draufsicht auf eine weitere mechanische Kodierung eines Anschlussbolzens;
- Fig. 11c: eine weitere Draufsicht auf eine mechanische Kodierung eines Anschlussbolzens.

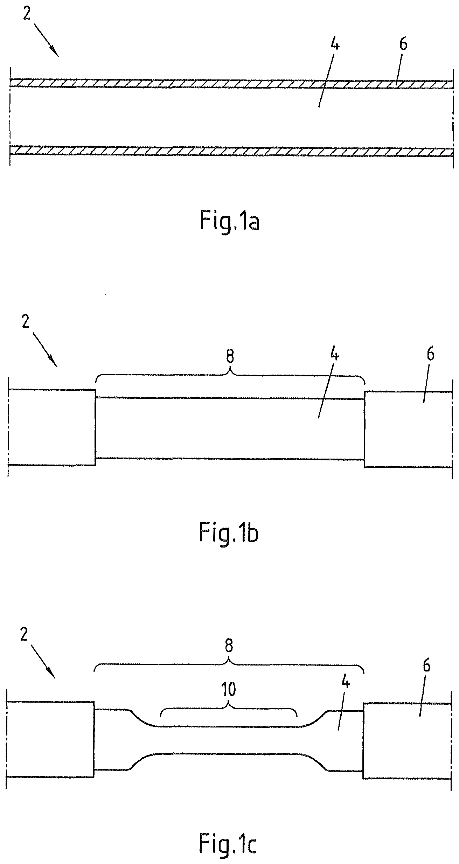

Figur 1a zeigt ein elektrisches Kabel 2 mit einem metallischen Leiter 4 und einer Isolation 6.

Der metallische Leiter 4 ist vorzugsweise als Vollmaterial und insbesondere biegesteif. Der Leiter 4 ist vorzugsweise ein Rundleiter. Das Material des Leiters 4 ist vorzugsweise Aluminium, insbesondere Aluminium 99,5. Die Biegesteifigkeit des Kabels 2 ergibt sich dann, wenn sich das Kabel 2 auf Grund seiner eigenen Gewichtskraft nicht plastisch verformen lässt. Es ist eine größere Kraft als die Gewichtskraft notwendig, um eine plastische Verformung des Kabels 2 herbeizuführen.

Die Isolation 6 ist vorzugsweise aus PVC oder Silikon gebildet.

Wie in Figur 1b dargestellt ist, ist bei einer gegenständlichen Anschlusskonsole das Kabel 2 in einem Mittenbereich, das heißt entfernt von seinen jeweiligen distalen Enden, abisoliert, so dass ein abisolierter Bereich 8 gebildet ist. In dem abisolierten Bereich 8 ist der Leiter 4 frei von der Isolation 6.

Nachdem der abisolierte Bereich 8 hergestellt wurde, kann das Kabel 2 beziehungsweise dessen Leiter 4 gestaucht oder gepresst werden, so dass sein Radius beziehungsweise sein Durchmesser verringert wird und ein flächiger Anschlussbereich 10 entsteht, wie in Figur 1c gezeigt. Der Anschlussbereich 10 eignet sich zum Anschluss des Flachteils, wie nachfolgend noch gezeigt wird. Auch ist es möglich und vorteilhaft, das Stauchen unmittelbar während des Fügens der Leitung mit dem Flachteil erfolgt. Dabei kann in einem Prozessschritt sowohl das stoffschlüssige Fügen als auch das Stauchen erfolgen.

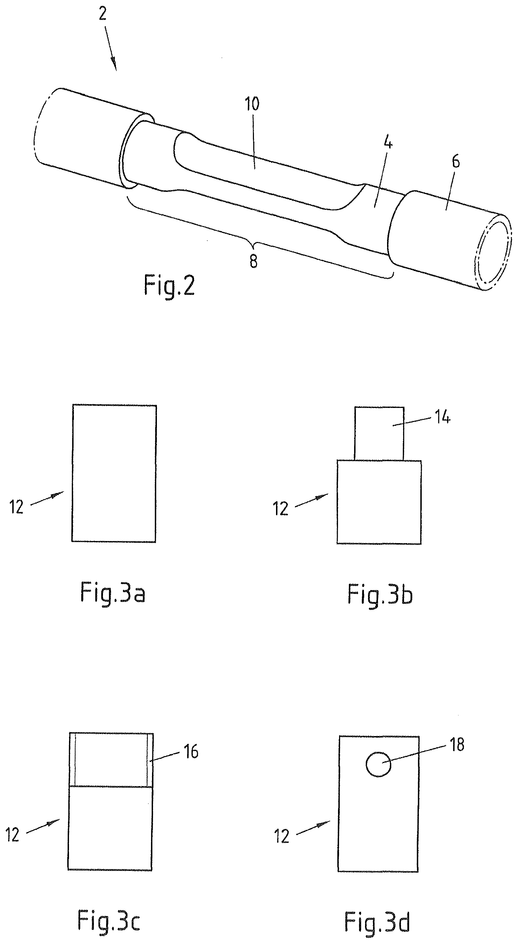

Figur 2 zeigt eine Ansicht eines Kabels 2 gemäß der Figur 1c. Zu erkennen ist, dass der Leiter 4 ein Rundleiter ist und im Bereich des Anschlussbereichs 10 flächig ausgebildet ist. Dies kann durch Stauchen oder Pressen erfolgen. Der Anschlussbereich 10 befindet sich im abisolierten Bereich 8, welcher entfernt von den distalen Enden des Kabels 2 ist.

Figur 3a zeigt einen Anschlussbolzen 12. Der in der Figur 3a gezeigte Anschlussbolzen 12 ist zylindrisch und aus einem Vollmaterial gebildet. Insbesondere kann der Anschlussbolzen 12 aus Edelstahl gebildet sein. Es ist jedoch auch möglich, den Anschlussbolzen 12 aus Kupfer, Aluminium oder Legierungen hiervon zu bilden. Der Anschlussbolzen 12 kann durch Drehen oder durch Schneiden einer Stange gebildet werden.

Figur 3b zeigt einen Anschlussbolzen 12, der an seinem einen Ende eine Anschlussfahne 14 aufweist, an die beispielsweise ein Klemmelement eines elektrischen Anschlusses angeklemmt werden kann. Insbesondere kann beispielsweise eine Klemme in Form von einer Batteriepolklemme an die Anschlussfahne 14 angeklemmt werden.

Figur 3c zeigt einen Anschlussbolzen 12, bei dem ein Ende mit einem Gewinde 16 versehen ist. An einen solchen Anschlussbolzen 12 kann beispielweise ein elektrischer Anschluss angeschraubt werden.

Figur 3d zeigt einen weiteren Anschlussbolzen 12, der an seinem Ende eine Öffnung 18, insbesondere in Form einer Bohrung aufweist. Durch diese Öffnung 18 kann beispielsweise eine Schraubverbindung mit einem elektrischen Anschluss hergestellt werden, in dem eine Schraube durch eine Öffnung 18 geschoben und/oder dort verschraubt wird.

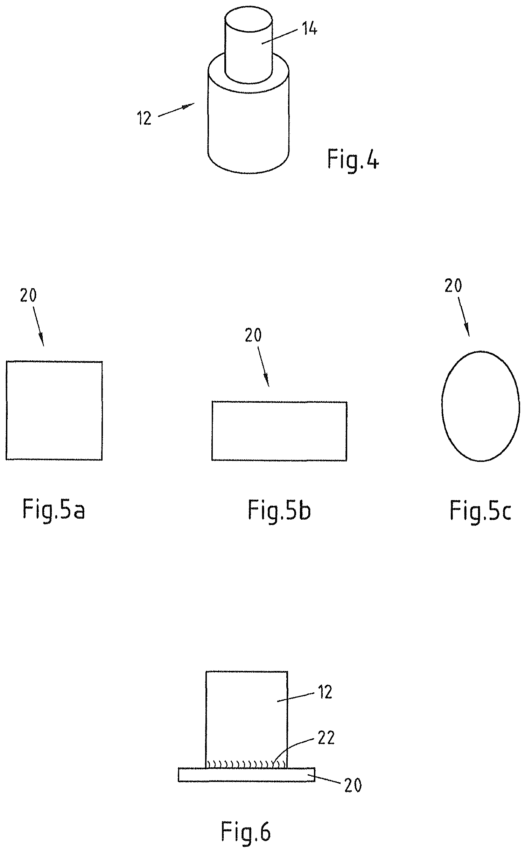

Figur 4 zeigt einen Anschlussbolzen gemäß Figur 3b in einer Ansicht. Zu erkennen ist, dass der zylindrische Bolzen 12 im Bereich der Anschlussfahne 14 einen geringeren Radius aufweist und beispielsweise zur Aufnahme eines Klemmelements gebildet ist.

Figur 5a zeigt eine Draufsicht auf ein Flachteil 20. Das Flachteil 20 ist vorzugsweise aus dem selben Material wie der Leiter 2 gebildet. Vorzugsweise ist das Flachteil 20 aus Aluminium oder Legierungen davon, insbesondere aus Aluminium 99,5 gebildet. Zu erkennen ist in Figur 5a, dass das Flachteil 20 einen quadratischen Querschnitt hat.

Wie jedoch in der Figur 5b zu erkennen ist, kann der Querschnitt des Flachteils 20 auch rechteckig sein.

Auch ein ovaler Querschnitt, wie in Figur 5c gezeigt, ist möglich. Runde Querschnitte oder andere Querschnittsformen des Flachteils 20 sind ebenfalls möglich und können je nach Einsatzzweck der Anschlusskonsole angepasst werden.

Figur 6 zeigt eine Ansicht eines Flachteils 20 mit einem daran angeschweißten Bolzen 12. Der Bolzen 12 ist vorzugsweise mittels Rotationsreibschweißen an das Flachteil 20 angeschweißt und es bildet sich eine Schweißnaht 22 zwischen dem Bolzen 12 und dem Flachteil 20. Die Schweißnaht 22 ist vorzugsweise frei von Aluminiumoxid und der Übergangswiderstand zwischen dem Bolzen 12 und dem Flachteil 20 ist im Bereich weniger µOhm.

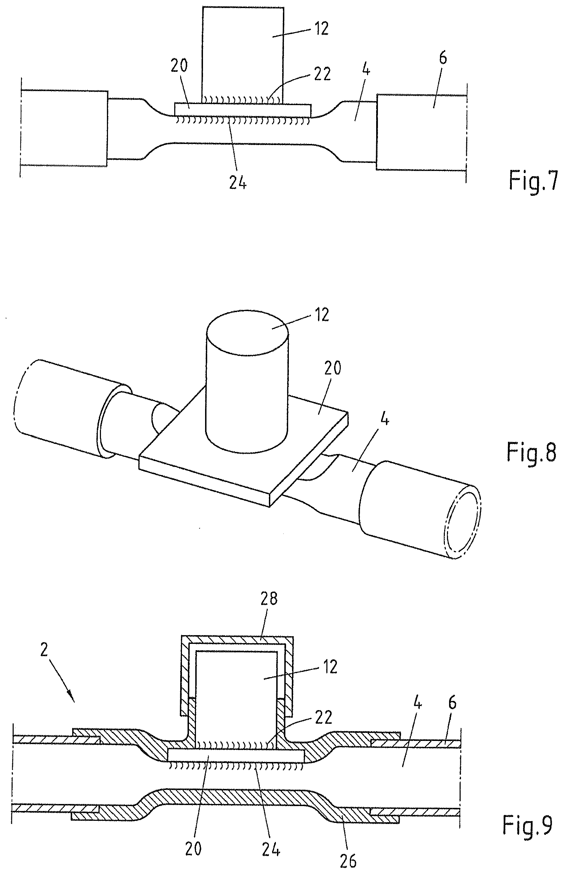

Figur 7 zeigt den Anschluss des Flachteils 20 an den Leiter 4. Zu erkennen ist, dass das mit dem Bolzen 12 bereits verbundene Flachteil 20 mit dem Leiter 4 stoffschlüssig verbunden ist. Diese Verbindung kann beispielsweise mittels eines Ultraschallschweißverfahrens hergestellt werden. Es bildet sich eine Schweißnaht 24 zwischen dem Flachteil 20 und dem Leiter 4. Zum Ultraschallverschweißen des Flachteils 20 mit dem Leiter 4 ist es möglich, den Bolzen 12 in eine Ultraschallsonotrode einzuspannen und den Leiter 4 mittels eines Ambosses gegen die Unterseite des Flachteils 20 zu pressen. Wird nun das Flachteil 20 mit Ultraschall beaufschlagt, bildet sich die Schweißnaht 24 zwischen dem Flachteil 20 und dem Leiter 4. Dabei kann auch das Planum hergestellt werden. Es ist somit nicht notwendig, das Planunm in einem vorangehenden Prozessschritt herzustellen. Durch das Ultraschallschweißen wird eine Aluminiumoxidschicht, welche entweder auf dem Leiter 4 und/oder dem Flachteil 20 gebildet ist aufgebrochen und der Übergangswiderstand über die Schweißnaht 24 ist ebenfalls im Bereich weniger µOhm.

Figur 8 zeigt eine Ansicht einer Anschlusskonsole gemäß Figur 7. Zu erkennen ist, dass die Kantenlänge des Flachteils 20 größer ist als der Durchmesser der Leitung 4. Ferner ist zu erkennen, dass die Leitung 4 auf der dem Bolzen 12 abgewandten Seite des Flachteils 20 mit dem Flachteil 20 verschweißt ist.

Um die Schweißnähte 22 und 24 vor Umwelteinflüssen zu schützen wird die Anschlusskonsole, wie in der Figur 9 gezeigt, mit einem Isolator 26 umspritzt. Der Isolator 26 ragt bis über die Isolation 6 des Kabels 2 hinaus. Der Isolator 26 umgibt das Flachteil 20 sowie den Bolzen 12 zumindest teilweise und isoliert somit die Schweißnähte 22, 24 vor Umwelteinflüssen. Im Bereich des dem Flachteils 20 abgewandten Endes des Bolzens 12 ist dieser, wie in der Figur 9 dargestellt, frei von einem Isolator 26. Eine Kappe 28 kann vorgesehen sein, um den Bolzen 12 zumindest zeitweise vor Umwelteinflüssen zu schützen.

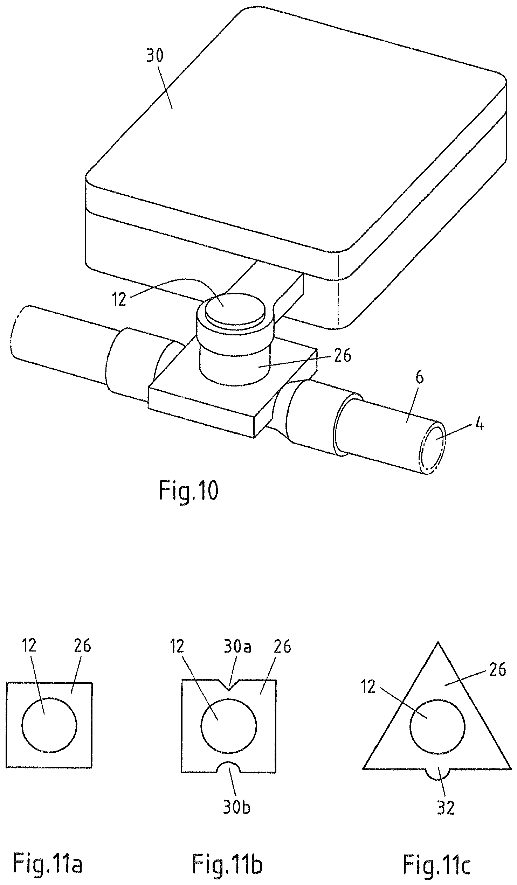

Figur 10 zeigt eine Ansicht einer umspritzten Anschlusskonsole gemäß Figur 9. Zusätzlich zu der Anschlusskonsole ist in der Figur 10 eine Sicherungsbox dargestellt. Die Sicherungsbox ist über einen elektrischen Leiter mit der Anschlusskonsole respektive dem Bolzen 12 verbunden. Der elektrische Leiter wird an den Bolzen 12 beispielsweise angeschraubt oder verklemmt und bietet somit eine elektrische Verbindung mit dem Leiter 4. Das elektrische Potential des Leiters 4 ist somit in der Sicherungsbox 30 abgreifbar und von dort können Abgänge zu den Verbrauchern abzweigen.

Um den Anschluss von Verbrauchern an den Bolzen 12 bei der Montage zu vereinfachen und insbesondere um zu verhindern, dass an den falschen Anschlussbolzen 12 elektrische Abgänge vorgesehen werden, ist der Isolator 26 im Bereich des Endes des Bolzens 12 durch Formgebung mechanisch kodiert. Figur 11a zeigt eine mechanische Kodierung in Form eines Quadrates. Der Isolator 26 ist im Bereich des Endes des Bolzens 12 quadratisch geformt, so dass beispielsweise nur quadratische Stecker beziehungsweise Steckergesichter auf den Bolzen 12 aufgesteckt werden können.

Die mechanische Kodierung des Isolators 26 kann beispielsweise auch, wie in Figur 11b dargestellt ist, durch Rücksprünge in dem Isolator 26 geformt sein. Die Kontur der Rücksprünge kann unterschiedlich sein, so dass mit verschiedenen Rücksprüngen verschiedene mechanische Formgebungen und Kodierungen möglich sind.

Auch der Umfang des Isolators 26 im Bereich des Endes des Bolzens 12 kann unterschiedlich gewählt sein, beispielsweise wie in der Figur 11c dargestellt in Dreiecksform mit einem Vorsprung 32. Je nach Kodierung können nur geeignete Stecker auf den Bolzen 12 aufgesteckt werden und somit kann sichergestellt werden, dass die richtigen Abgänge mit den richtigen Bolzen verbunden werden.

Mit Hilfe der gezeigten Anschlusskonsole ist ein besonders einfacher elektrischer Abgriff einer Energieleitung möglich. Die Energieleitung als solche wird elektrisch kaum beeinflusst und deren Leitungswiderstand bleibt im Wesentlichen unbeeinflusst von der Anzahl der Anschlusskonsolen. Ferner können die Anschlusskonsolen an den gewünschten Positionen entlang der Leitung vorgesehen werden, so dass eine dezentrale Verteilung der Energie im Bordnetz möglich ist. Mehrere Sicherungsboxen und Abgänge können je nach Notwendigkeit an unterschiedlichen Stellen innerhalb des Fahrzeugs in besonders einfacher Weise mit der Energieleitung verbunden werden. Eine Konfektionierung des Kabels ist somit individuell anpassbar und wird somit einem jeweiligen Fahrzeugtyp gerecht.

## Patentansprüche

1. Elektrische Anschlusskonsole für ein Kraftfahrzeugbordnetz umfassend,
- ein Kabel (2) mit einem metallischen Leiter (4), wobei der Leiter (4) ein Rundleiter ist, und
- einen mit dem Leiter (4) elektrisch und mechanisch verbundenen elektrischen Abgriff, wobei,
- ein Flachteil (20) in einem Anschlussbereich (8) des Leiters (4) stoffschlüssig mit dem Leiter (4) verbunden ist, wobei der Anschlussbereich (8) zwischen den Enden des Kabels (2) angeordnet ist, und
- der Leiter (4) im Bereich des Anschlussbereichs einen flächigen Bereich (10) aufweist, auf welchem das Flachteil (20) angeordnet ist,
**dadurch gekennzeichnet,**
- **dass** der Abgriff aus dem metallischen Flachteil (20) und einem mit dem Flachteil (20) verschweißten metallischen Anschlussbolzen (12) gebildet ist.

2. Elektrische Anschlusskonsole nach Anspruch 1, **dadurch gekennzeichnet, dass** das Kabel (2) eine Isolation (6) des Leiters (4) aufweist, dass der Anschlussbereich (8) in einem zwischen zwei Isolationsabschnitten der Isolation (6) angeordneten, abisolierten Bereich angeordnet ist und dass das Flachteil (20) in dem Anschlussbereich (8) mit dem Leiter (4) stoffschlüssig verbunden ist.

3. Elektrische Anschlusskonsole nach Anspruch 2, **dadurch gekennzeichnet, dass** in den Isolationsabschnitten die Isolation (6) den Leiter (4) vollständig umschließt.

4. Elektrische Anschlusskonsole nach einem der vorangehenden Ansprüche, **dadurch gekennzeichnet, dass** der Leiter (4) aus Aluminium oder einer Legierung davon gebildet ist und/oder dass der flächige Bereich (10) durch spanendes oder spanloses Umformen, insbesondere durch radiales Stauchen, des Leiters (4) geformt ist und/oder das der Leiter (4) aus Vollmaterial gebildet ist.

5. Elektrische Anschlusskonsole nach einem der vorangehenden Ansprüche, **dadurch gekennzeichnet, dass** das Flachteil (20) aus Aluminium oder Legierungen davon gebildet ist und/oder dass der Anschlussbolzen (12) aus Aluminium, Kupfer oder Legierungen davon, Stahl oder Edelstahl gebildet ist und/oder dass der Anschlussbolzen (12) verzinnt und/oder unternickelt ist.

6. Elektrische Anschlusskonsole nach einem der vorangehenden Ansprüche, **dadurch gekennzeichnet, dass** das Flachteil (20) mittels Ultraschallschweißen mit dem Leiter (4) verbunden ist.

7. Elektrische Anschlusskonsole nach einem der vorangehenden Ansprüche, **dadurch gekennzeichnet, dass** der Anschlussbolzen (12) mittels Reibschweißen, insbesondere Rotationsreibschweißen mit dem Flachteil (20) verbunden ist.

8. Elektrische Anschlusskonsole nach einem der vorangehenden Ansprüche, **dadurch gekennzeichnet, dass** das Flachteil (20) auf der dem Anschlussbolzen (12) abgewandten Seite mit dem Leiter (4) stoffschlüssig verbunden ist.

9. Elektrische Anschlusskonsole nach einem der vorangehenden Ansprüche, **dadurch gekennzeichnet, dass** das Flachteil (20), in Teilen der Anschlussbolzen (12) und der Leiter (4) mit einem Isolator (26), insbesondere bis über die Isolation (6) des Leiters (4) hinaus ummantelt, vorzugsweise umspritzt sind.

10. Elektrische Anschlusskonsole nach Anspruch 9, **dadurch gekennzeichnet, dass** der Anschlussbolzen (12) an seinem vom Flachteil (20) entfernten Ende frei von dem Isolator (26) ist.

11. Elektrische Anschlusskonsole nach Anspruch 9 oder 10, **dadurch gekennzeichnet, dass** der Isolator (26) zumindest im Bereich des von dem Flachteil (20) entfernten Ende des Anschlussbolzens (12) Poka Yoke mechanisch codiert ist, insbesondere dass der Umfang des Isolators (26) im Bereich des von dem Flachteil (20) entfernten Ende des Anschlussbolzens (12) durch Formgebung mechanisch codiert ist.

12. Elektrische Anschlusskonsole nach einem der vorangehenden Ansprüche, **dadurch gekennzeichnet, dass** zumindest eine Kantenlänge des Flachteils (20) größer als der Durchmesser der Leitung (4), insbesondere größer als der Durchmesser des Kabels (2) ist.

13. Elektrische Anschlusskonsole nach einem der vorangehenden Ansprüche, **dadurch gekennzeichnet, dass** das Flachteil (20) eine quadratische oder rechteckige Form hat.

14. Verwendung einer elektrischen Anschlusskonsole nach einem der vorangehenden Ansprüche in einer Energieleitung, insbesondere in einer Kraftfahrzeugbatterieleitung.

## Claims

1. Electrical connection console for a motor vehicle on-board electrical system, comprising
- a cable (2) having a metallic conductor (4) wherein the cable (4) is a round conductor, and
- an electrical tap connected to the conductor (4) electrically and mechanically, wherein
- a flat part (20) is materially bonded to the conductor (4) in a connection region (8) of the conductor (4), wherein the connection region (8) is arranged between the ends of the cable (2), and
- the conductor (4) has in the area of the connection region a flat region (10), onto which the flat part (20) is arranged,
- **characterized in that**
- the tap is formed from the metallic flat part (20) and a metallic connection bolt (12) welded to the flat part (20).

2. Electrical connection console of claim 1, **characterized in that,** the cable (2) has an insulation (6) of the conductor (4), **in that** the connection region (8) is arranged in a stripped region arranged between two insulation sections of the insulation (6), and that the flat part (20) is materially bonded to the conductor (4) in the connection region (8).

3. Electrical connection console of claim 2, **characterized in that,** the insulation (6) completely surrounds the conductor (4) in the insulation sections.

4. Electrical connection console according to one of the preceding claims, **characterized in that,** the conductor (4) is formed from aluminium or an alloy thereof, and/or **in that** the flat region (10) is formed by cut or uncut forming, in particular by radial compression, of the conductor (4), and/or **in that** the conductor (4) is formed from solid material.

5. Electrical connection console according to one of the preceding claims, **characterized in that,** the flat part (20) is formed from aluminium or alloys thereof, and/or **in that** the connection bolt (12) is formed from aluminium, copper or alloys thereof, steel or stainless steel, and/or that the connection bolt (12) is tin-plated and/or in underlaid with nickel.

6. Electrical connection console according to one of the preceding claims, **characterized in that,** the flat part (20) is connected to the conductor (4) by means of ultrasonic welding.

7. Electrical connection console according to one of the preceding claims, **characterized in that,** the connection bolt (12) is connected to the flat part (20) by means of friction welding, in particular rotational friction welding.

8. Electrical connection console according to one of the preceding claims, **characterized in that,** the flat part (20) is materially bonded to the conductor (4) on the side facing away from the connection bolt (12).

9. Electrical connection console according to one of the preceding claims, **characterized in that,** the flat part (20), in parts of the connection bolt (12) and the conductor (4) are preferably overmoulded with an insulator (26), in particular coated beyond the insulation (6) of the conductor (4), in particular by injection moulding.

10. Electrical connection console according to claim 9, **characterized in that,** the connection bolt (12) is free of the insulator (26) at its end which is remote from the flat part (20).

11. Electrical connection console according to claim 9 or 10, **characterized in that,** the insulator (26) is mechanically coded in a poka-yoke manner at least in the region of the end of the connection bolt (12) which is remote from the flat part (20), in particular in that the circumference of the insulator (26) is mechanically coded by shaping in the region of the end of the connection bolt (12) which is remote from the flat part (20).

12. Electrical connection console according to one of the preceding claims, **characterized in that,** at least one edge length of the flat part (20) is greater than the diameter of the conductor (4), in particular greater than the diameter of the cable (2).

13. Electrical connection console according to one of the preceding claims, **characterized in that,** the flat part (20) has a square or rectangular shape.

14. Use of an electrical connection console according to one of the preceding claims in an energy conductor, in particular in a motor vehicle battery conductor.

## Revendications

1. Console de connexion électrique pour un système électrique de véhicule embarqué comprenant,
- un câble (2) ayant un conducteur métallique (4), le conducteur (4) étant un conducteur rond, et
- une entrée électrique reliée électriquement et mécaniquement au conducteur (4),où
- une partie plate (20) est reliée par raccordement de matière au conducteur (4) dans une zone de connexion (8) du conducteur (4), la zone de connexion (8) étant disposée entre les extrémités du câble (2), et
- le conducteur (4) présente, dans la région de la région de raccordement, une région plate (10) sur laquelle est disposée la partie plate (20),
**caractérisée**
- **en ce que** l'entrée est formée à partir de la partie plate métallique (20) et d'une tige de raccordement métallique (12) soudé à la partie plate (20).

2. Console de raccordement électrique selon la revendication 1, **caractérisée en ce que** le câble (2) présente une isolation (6) du conducteur (4), **en ce que** la zone de raccordement (8) est disposée dans une zone dénudée disposée entre deux parties isolantes de l'isolation (6), et **en ce que** la partie plate (20) est reliée au conducteur (4) dans la zone de raccordement (8) par raccordement de matière.

3. Console de raccordement électrique selon la revendication 2, **caractérisée en ce que** l'isolation (6) entoure complètement le conducteur (4) dans les sections d'isolation.

4. Console de raccordement électrique selon l'une des revendications précédentes, **caractérisée en ce que** le conducteur (4) est réalisé en aluminium ou en un alliage de celui-ci et/ou **en ce que** la zone plate (10) est réalisée par formage avec ou sans enlèvement de copeaux, en particulier par refoulement radial, du conducteur (4) et/ou **en ce que** le conducteur (4) est réalisé en matériau massif.

5. Console de raccordement électrique selon l'une des revendications précédentes, **caractérisée en ce que** la partie plate (20) est réalisée en aluminium ou en alliages de celui-ci et/ou **en ce que** la tige de raccordement (12) est réalisée en aluminium, cuivre ou en alliages de celui-ci, acier ou acier inoxydable et/ou **en ce que** la tige de raccordement (12) est étamée et/ou nickelée.

6. Console de raccordement électrique selon l'une des revendications précédentes, **caractérisée en ce que** la partie plate (20) est reliée au conducteur (4) par soudage par ultrasons.

7. Console de raccordement électrique selon l'une des revendications précédentes, **caractérisée en ce que** la tige de raccordement (12) est reliée à la partie plate (20) par soudage par friction, en particulier par friction rotative.

8. Console de raccordement électrique selon l'une des revendications précédentes, **caractérisée en ce que** la partie plate (20) est reliée au conducteur (4) de par raccordement de matière sur le côté opposé à la tige de raccordement (12).

9. Console de raccordement électrique selon l'une des revendications précédentes, **caractérisée en ce que** la partie plate (20), la tige de raccordement (12) en partie, et le conducteur (4) sont gainés, de préférence gainés par injection, avec un isolant (26), en particulier au-delà de l'isolation (6) du conducteur (4).

10. Console de connexion électrique selon la revendication 9, **caractérisée en ce que** la tige de raccordement (12) est libre de l'isolant (26) à son extrémité opposée à la partie plate (20).

11. Console de connexion électrique selon la revendication 9 ou 10,
**caractérisée en ce que** l'isolant (26) est codé mécaniquement par Poka Yoke au moins dans la région de l'extrémité de la tige de raccordement (12) éloignée de la partie plate (20), en particulier **en ce que** la circonférence de l'isolant (26) est codée mécaniquement par forme dans la région de l'extrémité de la tige raccordement (12) éloignée de la partie plate (20).

12. Console de raccordement électrique selon l'une des revendications précédentes, **caractérisée en ce qu'**au moins une longueur de bord de la partie plate (20) est supérieure au diamètre de la ligne conductrice (4), en particulier supérieure au diamètre du câble (2).

13. Console de raccordement électrique selon l'une des revendications précédentes, **caractérisée en ce que** la partie plate (20) a une forme carrée ou rectangulaire.

14. Utilisation d'une console de connexion électrique selon l'une des revendications précédentes dans une conduite d'énergie, en particulier dans un câble de batterie de véhicule automobile.
